# EUROPEAN PATENT APPLICATION

(11) **EP 4 836 053 A2**
(43) Date of publication of application: **04.11.2026**
(21) Application number: 26205220.2
(22) Date of filing: 30.09.2022
(51) Int. Cl.: H01M 10/0525

(54) **WINDING DEVICE AND METHOD FOR WINDING MATERIALS**

(30) Priority: 25.03.2022 CN 202210318006
(62) Document number(s) of the earlier application(s) in accordance with Art. 76 EPC: 22925254.9 / 4 280 338
(71) Applicant: Contemporary Amperex Technology (Hong Kong) Limited, Central (HK)
(72) Inventor: XIE, Chao, Ningde, Fujian, 352100 (CN); WANG, Yiruo, Ningde, Fujian, 352100 (CN); CHEN, Yaojin, Ningde, Fujian, 352100 (CN); ZHAO, Wankui, Ningde Fujian, 352100 (CN); HUANG, Guoda, Ningde Fujian, 352100 (CN); HU, Shengsheng, Ningde, Fujian, 352100 (CN)
(74) Representative: Lorenz Seidler Gossel Part. mbB

(57) **Abstract**

Embodiments of the present application relate to the field of battery manufacturing technologies, and particularly to a winding device and a material winding method; the winding device is configured to wind a material and includes: a winding switching mechanism, a compounding mechanism and a breaking mechanism, wherein the winding switching mechanism includes a rotating disc and a plurality of winding pins arranged on the rotating disc at intervals, and the material is wound around one winding pin along a preset path; the compounding mechanism is provided upstream of the winding pin along the preset path and configured to laminate and then compound the plural layers of materials at a preset position; the breaking mechanism is provided between the compounding mechanism and any winding pin along the preset path and configured to break the compounded plural layers of materials at a compounding region. The adoption of the winding device and the material winding method according to the embodiments of the present application can prevent the plural layers of materials from being layered at the breakage moment and after breakage, thereby avoiding or alleviating misalignment between the plural layers of materials.

## Description

### Cross-reference to Related Applications

The present application claims priority to Chinese Patent Application No. 202210318006.8, entitled "Winding Device and Material Winding Method", filed on March 25, 2022, the entire content of which is incorporated herein by reference.

### Technical Field

Embodiments of the present application relate to the field of battery manufacturing technologies, and particularly to a battery cell comprising an electrode assembly.

### Background Art

A lithium battery has advantages of a light weight, large energy storage, large power, a stable discharge performance, a long service life, or the like, and is widely applied to the fields of electric bicycles and new energy automobiles. An electrode assembly is a most important assembly inside the battery, and a quality of the electrode assembly directly affects the performance of the battery.

In a production process of the battery, a winding apparatus is required to wind an electrode plate and a separator to form a jelly roll, and the jelly roll is used as a prototype of the electrode assembly, and can be processed into a flat shape, a triangular shape or another shape according to requirements, so as to be mounted into a housing to form a battery cell. Thus, a winding process is an indispensable step during production of the wound electrode assembly. In the winding process, a guarantee of alignment between plural layers of separators is most important, so as to ensure that a positive electrode plate and a negative electrode plate are not in direct contact at any position when the electrode plates are sandwiched between the separators, thereby preventing a short circuit of the battery cell.

However, in the production process, the plural layers of separators are often misaligned unavoidably, and especially, misalignment at a head end and a tail end of the jelly roll is obvious, which seriously affects a quality of the battery; therefore, avoidance or alleviation of the misalignment at the head end and the tail end of the jelly roll is a problem to be solved urgently in the process of manufacturing the electrode assembly.

### Summary

In view of the above problem, embodiments of the present application provide a battery cell comprising an electrode assembly, the electrode assembly being a jelly roll, wherein the invention can alleviate or even avoid misalignment of plural layers of materials at a head end and a tail end of a jelly roll after a cutting-off operation.

According to an aspect of the embodiments of the present application, there is provided a winding device for winding a material, including: a winding switching mechanism, a compounding mechanism and a breaking mechanism, wherein the winding switching mechanism includes a rotating disc and a plurality of winding pins arranged on the rotating disc at intervals, and the material is wound around one winding pin along a preset path; the compounding mechanism is provided upstream of the winding pin along the preset path and configured to laminate and compound the plural layers of materials at a preset position; the breaking mechanism is provided between the compounding mechanism and any winding pin along the preset path and configured to break the compounded plural layers of materials at a compounding region.

By adopting the above solution, the compounding mechanism is provided upstream of the winding pin, and the plural layers of materials are laminated and compounded at the preset position by the compounding mechanism, such that the plural layers of materials at each of two end portions formed after the materials are broken by the breaking mechanism at the compounding region are in a relatively fixed state, thus avoiding that the plural layers of materials are layered at the breakage moment and after breakage, and therefore, end portions of the plural layers of materials are misaligned. Furthermore, since the breaking mechanism breaks the materials at the compounding region, during the breakage, even if the plural layers of materials are broken successively instead of simultaneously, the material layer broken earlier also cannot spring back immediately due to a compounding relationship with other material layers, thus avoiding that each material layer springs back individually due to an inconsistent breakage order of the plural layers of materials, and then avoiding that the plural layers of materials are misaligned under an impact of a spring back force.

In some embodiments, the compounding mechanism includes a first hot melting piece, a second hot melting piece and a driving assembly, the first hot melting piece and the second hot melting piece are oppositely arranged and spaced apart, and the material passes between the first hot melting piece and the second hot melting piece; the driving assembly is connected with the first hot melting piece and/or the second hot melting piece to drive the first hot melting piece and the second hot melting piece to approach each other, so as to bond and compound the plural layers of materials through hot pressing.

By adopting the above solution, when the plural layers of materials are conveyed through the preset path, the first hot melting piece and the second hot melting piece approach each other to sandwich the plural layers of materials, and the plural layers of materials are clamped and hot melted from two sides, such that the plural layers of materials can be rapidly heated and pressed to be bonded and compounded.

In some embodiments, a plurality of protrusions are arranged on each of surfaces of the first hot melting piece and/or the second hot melting piece at intervals, and the protrusions are configured to abut against the material to hot melt a plurality of spaced holes in the material.

By adopting the above solution, in the process that the first hot melting piece and the second hot melting piece approach each other, the protrusion comes into contact with the material first, the protrusion more tightly abuts against the material, and in this case, the material at a position corresponding to the protrusion is heated for a longer time and easier to melt, and since the material at the position corresponding to the protrusion is abutted more tightly, the material more easily flows outside an abutting region of the protrusion after heated and melted, so as to form the hole at the position corresponding to the protrusion; in addition, the plural layers of materials are bonded at edges of the holes, such that the plural layers of materials are not prone to separation and misalignment.

In some embodiments, a pre-cutting portion is provided between adjacent protrusions, and a protruding height of the pre-cutting portion is lower than that of the protrusion, so as to contact the material and form a pre-cutting position on the material.

By adopting the above solution, when the first hot melting piece and the second hot melting piece approach, the protrusion and the pre-cutting portion abut against the material sequentially, and when the protrusion hot melts the holes in the plural layers of materials, since the protruding height of the pre-cutting portion is lower than that of the protrusion, the material at a position corresponding to the pre-cutting portion is pre-segmented, pressed to be thinned, but not broken, and therefore, the pre-cutting position is a weak region of the material, and the weak region is connected with two adjacent holes, such that the breaking mechanism more easily breaks the material along a path formed by the pre-cutting position and the holes, and the material is not prone to deformation in the breaking process.

In some embodiments, the breaking mechanism is an axial roller provided in a center of the rotating disc, and the axial roller is configured to tension the material between any two winding pins and break the materials compounded together at the pre-cutting position.

By adopting the above solution, the material is broken at the hole and weak at the pre-cutting position, such that the axial roller can easily break the material at the pre-cutting position only by applying a tensioning force to the material, so as to achieve a material breaking effect.

In some embodiments, the compounding mechanism includes a gluing member configured to spray glue between two adjacent layers of materials to compound the materials.

By adopting the above solution, the manner of compounding the plural layers of materials by spraying the glue is simpler and easier, and damage to a structure of the materials is smaller.

In some embodiments, the breaking mechanism includes a cutter provided on the rotating disc, and the cutter is configured to cut off the compounded plural layers of materials at the compounding region.

By adopting the above solution, the plural layers of materials are cut off by the cutter, such that the end portions of the cut-off materials are smoother.

In some embodiments, the cutter is configured as a heatable cutter.

By adopting the above solution, the heatable cutter can cut off the material by means of hot cutting, and a cut-off speed is higher.

In some embodiments, the winding device further includes a pressing mechanism, and the pressing mechanism is provided on one side of a path of rotation of the winding pin with the rotating disc and configured to press the material on the winding pin tightly during breakage.

At the moment when the plural layers of materials are broken, the material wound around the winding pin may loosen due to loss of the tension, and the material on the winding pin is tightly pressed by the pressing mechanism, such that the material is not prone to loosen.

According to another aspect of the embodiments of the present application, there is provided a material winding method, including the following steps:
winding plural layers of materials around a first winding pin on a winding switching mechanism;
laminating and compounding the plural layers of materials at a preset position;
rotating a rotating disc of the winding switching mechanism to switch winding of the plural layers of materials to a second winding pin, a compounding region of the plural layers of materials being located between the first winding pin and the second winding pin; and
breaking the materials at the compounding region of the plural layers of materials.

By adopting the above solution, since the plural layers of materials are compounded together in advance before broken, the plural layers of materials at each of two end portions formed after the materials are broken at the compounding region are in a relatively fixed state, such that the materials are not prone to be layered at the breakage moment and after breakage, and the plural layers of materials are prevented from being misaligned. Furthermore, since a breaking position of the plural layers of materials is located at the compounding region, during the breakage, even if the plural layers of materials are broken successively instead of simultaneously, the material layer broken earlier also cannot spring back immediately due to a compounding relationship with other material layers, thus avoiding that each material layer springs back individually due to an inconsistent breakage order of the plural layers of materials, and then avoiding that the plural layers of materials are misaligned under an impact of a spring back force.

In some embodiments, a method of compounding the plural layers of materials includes at least one of hot melting, rolling, and gluing.

By adopting the above solution, the plural layers of materials can be compounded through hot melting, rolling and gluing, a manner is simple, and implementation is easy.

In some embodiments, the plural layers of materials are compounded at plural positions along a conveying direction of the materials.

The adoption of the above solution prevents poor compounding during one-position compounding. Furthermore, after the materials are compounded at the plural positions, the compounding region includes compounding positions at two extreme ends in the conveying direction and a region therebetween, such that an area of the compounding region is greatly increased, and in the subsequent breaking process, a breaking position can be located at any position of the compounding region, a region for breaking is increased, and a positioning difficulty in an operation process of a breaking mechanism is reduced.

In some embodiments, the breaking position is located at any compounding position or between any two compounding positions when the materials are broken at the compounding region of the plural layers of materials.

Whether the breaking position is located at any compounding position or between any two compounding positions, the plural layers of materials at the two end portions formed after the materials are broken can be guaranteed to be in a compounded state, thus preventing misalignment caused by layering of the plural layers of materials.

In some embodiments, when the plural layers of materials are compounded through hot melting, the compounding method includes: hot melting a plurality of spaced holes in the material, the plural layers of materials being bonded and compounded at edges of the holes. A method of breaking the materials at the compounding region of the plural layers of materials includes: rotating a first winding pin and/or a second winding pin to break the materials at the plurality of spaced holes by pulling.

By adopting the above solution, the holes are formed in the plural layers of materials through hot melting, and the plural layers of materials are bonded and compounded at the edges of the holes and not prone to be separated. On an arrangement line of the holes, the materials are only connected by spacing regions between the holes, such that connection is weak, and when the first winding pin and/or the second winding pin rotate, the materials between the first winding pin and the second winding pin are subjected to a large tension and broken at the weak positions; that is, the materials are broken at the plural spaced holes, the materials are broken without a cutter, a structure is simple, and an operation efficiency is high.

In some embodiments, when the plural layers of materials are compounded through hot melting, the compounding method further includes: forming pre-cutting positions between the plurality of spaced holes through hot melting, the plural layers of materials being bonded and compounded at the pre-cutting positions. The method of breaking the materials at the compounding region of the plural layers of materials further includes: rotating the first winding pin and/or the second winding pin to break the materials at the pre-cutting positions between the plurality of spaced holes by pulling.

By adopting the above solution, the pre-cutting position is a weak region of the material, and the weak region is connected with two adjacent holes, such that when the first winding pin and/or the second winding pin rotate, the material between the first winding pin and the second winding pin is more easily broken along a connecting line of the pre-cutting position and the holes after tensioned, and the material is not prone to be deformed in the breaking process.

According to a third aspect of the embodiments of the present application, there is provided a battery cell comprising an electrode assembly in the form of a jelly roll formed by winding a plurality of layers of materials, wherein the plurality of layers of materials are provided with a compounding portion, the plurality of layers of materials are laminated and compounded together at the compounding portion, and a predetermined distance exists between the compounding portion and an end portion of the material in a winding direction; the end portion is an end of an innermost circle of the material in the winding direction, or the end portion is an end of an outermost circle of the material in the winding direction.

In some embodiments, a plurality of compounding portions are provided, and the plurality of compounding portions are arranged at intervals.

In some embodiments, the plural layers of materials are compounded together at the compounding portion by means of hot melting compounding and/or rolling compounding and/or gluing compounding.

In some embodiments, the predetermined distance is less than a perimeter of the innermost circle of the jelly roll when the end portion is the end of the innermost circle of the material in the winding direction.

In some embodiments, the predetermined distance is less than a perimeter of the outermost circle of the jelly roll when the end portion is the end of the outermost circle of the material in the winding direction. In summary, in the winding device according to the embodiment of the present application, the compounding mechanism is provided upstream of the winding pin, and the plural layers of materials are laminated and then compounded together by the compounding mechanism, such that the plural layers of materials at each of the two end portions formed after the materials are broken by the breaking mechanism at the compounding region are in a relatively fixed state, and therefore, the materials are not prone to be layered at the breakage moment and after breakage, and the plural layers of materials are prevented from being misaligned.

The foregoing description merely briefly describes the technical solution of the embodiments of the present application. To more clearly understand the technical means of the embodiments of the present application, the technical means of the present application can be implemented according to content of the specification. Moreover, to make the foregoing and other objectives, characteristics, and advantages of the embodiments of the present application more comprehensible, particular embodiments of the present application are described below.

### Brief Description of Drawings

To describe the technical solutions of the embodiments of the present application more clearly, the following briefly describes the accompanying drawings required for describing the embodiments. Apparently, the accompanying drawings in the following description show some embodiments of the present application, and a person of ordinary skill in the art may still derive other drawings from these accompanying drawings without creative efforts.
FIG. 1 is a schematic structural diagram of a winding device according to an embodiment of the present application.
FIG. 2 is a schematic structural diagram of a compounding region on a material in the embodiment of the present application.
FIG. 3 is a schematic structural diagram of a compounding region on another material in the embodiment of the present application.
FIG. 4 is a schematic structural diagram of a compounding mechanism in the embodiment of the present application.
FIG. 5 is a structure of a first hot melting piece in the embodiment of the present application.
FIG. 6 is a schematic structural diagram of another first hot melting piece in the embodiment of the present application.
FIG. 7 is a top view of the first hot melting piece of FIG. 6.
FIG. 8 is a schematic structural diagram of a material compounded by the compounding mechanism in the embodiment of the present application.
FIG. 9 is a schematic diagram of a state where the material compounded by the compounding mechanism is broken in the embodiment of the present application.
FIG. 10 is a schematic structural diagram of a winding device according to another embodiment of the present application.
FIG. 11 is a schematic structural diagram of a winding device according to an embodiment of the present application.
FIG. 12 is a flow chart of a material winding method according to an embodiment of the present application.
FIG. 13 is a flow chart of a second material winding method according to an embodiment of the present application.
FIG. 14 is a flow chart of a third material winding method according to an embodiment of the present application.
FIG. 15 is a flow chart of a fourth material winding method according to an embodiment of the present application.
FIG. 16 is a flow chart of a fifth material winding method according to an embodiment of the present application.
FIG. 17 is a schematic structural diagram of a jelly roll according to an embodiment of the present application.
FIG. 18 is a schematic structural diagram of another jelly roll according to an embodiment of the present application.

The drawings are not drawn to scale.
Reference numerals: 1. winding switching mechanism; 11. rotating disc; 12. winding pin; 2. compounding mechanism; 21. first hot melting piece; 22. second hot melting piece; 23. driving assembly; 24. protrusion; 25. pre-cutting portion; 26. gluing member; 3. breaking mechanism; 31. axial roller; 32. cutter; 4. pressing mechanism; 41. pressing piece; 42. driving piece; 5. material; 51. compounding region; 52. compounding position; 53. hole; 54. pre-cutting position; 6. jelly roll; 61. compounding portion.

### Detailed Description

To make the objectives, technical solutions and advantages of the embodiments of the present application clearer, the technical solutions in the embodiments of the present application are clearly and completely described with reference to the accompanying drawings in the embodiments of the present application, and apparently, the described embodiments are not all but a part of the embodiments of the present application. All other embodiments obtained by a person of ordinary skill in the art based on the embodiments of the present application without creative efforts shall fall within the protection scope of the present application.

Unless defined otherwise, all technical and scientific terms used herein have the same meanings as are commonly understood by those skilled in the art; the terms used in the specification of the present application are merely for the purpose of describing particular embodiments, and are not intended to limit the present application.

The terms "including" and "having" and their any variations in the specification, claims and drawing descriptions of the present application are intended to cover but not exclude other contents. The word "a" or "an" does not exclude the presence of a plurality.

The term "embodiment" mentioned herein is intended to mean that specific features, structures, or characteristics described in conjunction with the embodiments may be included in at least one embodiment of the present application. This term "embodiment" appearing at various places throughout the specification does not necessarily refer to the same embodiments, or independent or alternative embodiments that are mutually conflicting with other embodiments. Persons skilled in the art can explicitly and implicitly understand that the embodiments described herein may be combined with other embodiments.

The term "and/or" herein only describes an association relationship between associated objects, and indicates that three relationships may exist. For example, A and/or B may indicate three cases: only A exists; both A and B exist; and only B exists. In addition, in this specification, the symbol "/" generally indicates that associated objects have a relationship of "or".

All directional terms in the following description mean the directions shown in the drawings, and are not intended to limit the specific structure of the winding device according to the present application. For example, in descriptions of the present application, directions or positional relationships indicated by terms "center", "longitudinal", "transverse", "length", "width", "thickness", "upper", "lower", "front", "rear", "left", "right", "vertical", "horizontal", "top", "bottom", "inner", "outer", "clockwise", "anticlockwise", "axial", "radial", "circumferential" etc. are based on orientations or positional relationships shown in the accompanying drawings, and they are used only for describing the present application and for description simplicity, but do not indicate or imply that an indicated device or element must have a specific orientation or be constructed and operated in a specific orientation. Therefore, it cannot be understood as a limitation on the present application.

Furthermore, the terms "first", "second", or the like, in the specification and claims of the present application or in the foregoing drawings are used for distinguishing between different objects and not intended to describe a particular sequence, and may explicitly or implicitly include one or more such features.

In the description of the present application, unless otherwise specified, "a plurality of" means more than two (including two), and similarly, "a plurality of groups" means more than two groups (including two groups).

In the description of the present application, it should be noted that, unless explicitly stated or limited otherwise, the terms "mounted", "connected" and "coupled" should be interpreted broadly; for example, mechanical structures being "connected" or "coupled" may refer to physical connections; for example, the physical connections may be fixed connections, for example, fixed connections by fasteners, such as screws, bolts or other fasteners; the physical connections can also be detachable connections, such as mutual snapping or clamped connections; the physical connections may also be integral connections, for example, connections by welding, bonding or integral forming. Circuit structures being "connected" or "coupled" may mean not only physical connections but also electrical or signal connections, for example, direct connections, i.e., physical connections, or indirect connections via at least one intermediate element, as long as electrical communication is realized, or the connection may be communication between two elements; in addition to circuits, the signal connections may be realized through a media medium, such as radio waves. The above terms can be understood by those skilled in the art according to specific situations.

An electrode assembly is a most important assembly of a battery cell and includes a laminated structure and a wound structure; in the wound structure, the electrode assembly is generally formed by winding a positive electrode plate, a negative electrode plate and a separator, and the separator is sandwiched between the positive electrode plate and the negative electrode plate to prevent a short circuit caused by direct contact between the positive electrode plate and the negative electrode plate.

In a production process of a battery, a winding apparatus is required to wind the electrode plates and the separator to form a jelly roll, and the jelly roll is used as a prototype of the electrode assembly, and can be processed into a flat shape, a triangular shape or another shape according to requirements, so as to be mounted into a housing to form the battery cell.

However, in the production process, the plural layers of separators are often misaligned unavoidably, and especially, misalignment at a head end and a tail end of the jelly roll is obvious, which seriously affects a quality of the battery.

The inventor researches the forming process of the jelly roll, and finds that winding of the jelly roll is generally completed by a rotary tower, the rotary tower generally includes a rotating disc, a center of the rotating disc is provided with a rotating shaft, an edge of the rotating disc is provided with a station for arranging a winding pin, and in the winding process, a certain number of layers of separators can be wound around the winding pin in advance, and then, the electrode plate is conveyed to the winding pin, and finally, the electrode plate and the separators are wound by the winding pin together to form the jelly roll, and when one jelly roll is to be wound completely, an electrode plate feeding mechanism firstly cuts off the electrode plate, the rotating disc rotates to rotate the station where the winding pin with the wound jelly roll is positioned out of a winding position, and the winding pin on another station is rotated to the winding position. When the separator is switched to the new winding pin, the separator between the two winding pins is cut off by using a cutting mechanism, one of two end portions formed after cutting is used as the tail end of the previous jelly roll, and the other end portion is used as the head end of the next jelly roll.

The inventor discovers through long-term observation that at the moment when the plural layers of separators are cut off, all the separators may spring back to different degrees, and just because the separators spring back to different degrees in different directions, the separators are misaligned. The reason why the separators spring back to different degrees in different directions is that the separator close to a cutter side is firstly broken and the separator far away from the cutter side is finally broken in a cutting process, such that the separators are cut off at different times, the separator cut off firstly springs back firstly, the separator cut off later springs back later, and finally, the separators are misaligned.

In view of this, embodiments of the present application provide a winding device and a material winding method, in which a compounding mechanism is provided upstream of a breaking mechanism and a winding pin, and before the separators are cut off, the plural layers of separators are compounded and bonded to each other, such that the plural layers of separators are broken at a compounding region at the breaking mechanism, and at this point, due to a compounding relationship among the separators, a situation where the separators spring back to different degrees in different directions due to an inconsistent cut-off sequence of the separators can be avoided, thus effectively avoiding or alleviating a situation where the plural layers of separators at the head end and the tail end of the jelly roll are misaligned after cutting.

The winding device and the material winding method according to the present application are not limited to jelly roll forming in the battery manufacturing process, but can also be applied to other situations where plural layers of materials are prevented from being misaligned during production and manufacture, and therefore, wound products are collectively called a material hereinafter.

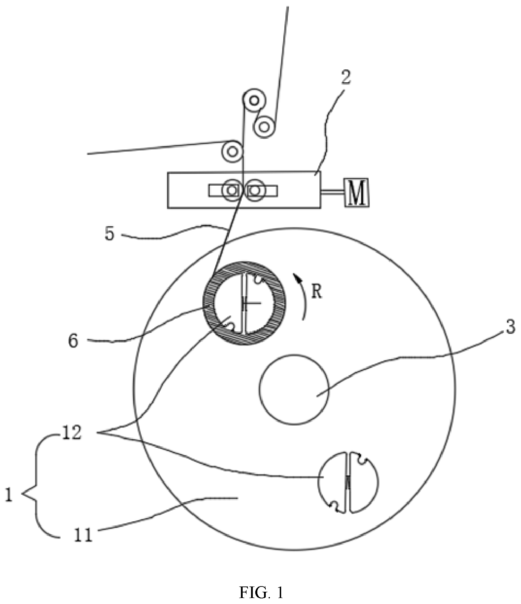

FIG. 1 is a schematic structural diagram of a winding device according to an embodiment of the present application, and as shown in FIG. 1, the winding device includes: a winding switching mechanism 1, a compounding mechanism 2 and a breaking mechanism 3, wherein the winding switching mechanism 1 includes a rotating disc 11 and a plurality of winding pins 12 arranged on the rotating disc 11 at intervals, and a material 5 is wound around one winding pin 12 along a preset path; the compounding mechanism 2 is provided upstream of the winding pin 12 along the preset path and configured to laminate and compound the plural layers of materials 5 at a preset position; the breaking mechanism 3 is provided between the compounding mechanism 2 and any winding pin 12 along the preset path and configured to break the compounded plural layers of materials 5 at a compounding region.

The rotating disc 11 can be a circular disc or a disc with other shapes, the rotating disc 11 includes a side surface and two end surfaces, the rotating disc 11 can rotate around an axis perpendicular to the end surfaces under the action of any driving device, the winding pin 12 is located on the end surface of the rotating disc 11, and when the winding switching mechanism 1 works, the rotating disc 11 is generally only required to rotate during winding switching; that is, the plural layers of materials 5 enter one side of the rotating disc 11 along the preset path and are wound around the winding pin A on one station, and when a number of the layers of the materials 5 wound around the winding pin A reaches a preset layer number, or a thickness of the materials 5 wound around the winding pin A reaches a preset thickness, the rotating disc 11 is rotated, such that the winding pin A rotates to a discharging station with the rotating disc 11, and meanwhile, another winding pin B rotates to the winding station with the rotating disc 11, and the materials 5 are switched to the winding pin B for continuous winding, and the materials 5 on the winding pin A are taken off at the discharging station, thereby completing one time of winding switching.

Optionally, distances between the winding pins 12 and the rotation axis of the rotating disc 11 may be equal or unequal, and when the distances between the plurality of winding pins 12 and the rotation axis of the rotating disc 11 are equal, the winding pins 12 can stay at the same winding station during winding switching in the process that the rotating disc 11 performs winding switching through its own rotation, such that the material 5 is switched from one winding pin 12 to another winding pin 12 without changing the preset path of the material 5.

Optionally, included angles formed by connecting lines between adjacent winding pins 12 and the rotation axis of the rotating disc 11 are equal, such that one winding pin 12 stays at a fixed winding station and another winding pin 12 stays at a fixed winding station every time the rotating disc 11 rotates by a fixed angle, thereby improving an efficiency of batch operation.

The direction R in the drawing indicates a rotation direction of the winding pin 12 when the material is wound, and in actual production, the rotation direction of the winding pin may be different from that in the drawing, which is not limited in the embodiment of the present application.

The compounding mechanism 2 is provided on the preset path of the material 5, so as to laminate and compound the plurality of layers of materials 5 at a preset position when the materials 5 pass; the preset position is a preset position of a terminal end or a head end of a jelly roll 6; for example, after a total length L of the material 5 required by one jelly roll 6 is estimated, starting from initial winding of the material 5 on the winding pin A, the material with a length after the material 5 with the length L is wound around the winding pin A or the material with a length before and after the length L is reached serves as the preset position, and the plural layers of materials 5 are laminated and compounded at the preset position. The compounding mechanism 2 may act from one side of the plural layers of laminated materials 5, or act from both sides of the plural layers of materials 5, or act between two adjacent layers of materials 5, which is not limited in the embodiment of the present application.

The upstream direction of the winding pin 12 indicates the direction in which the material 5 enters the winding pin 12 of the winding station; that is, the compounding mechanism 2 has completed compounding the material 5 at the preset position before the material 5 enters the winding station.

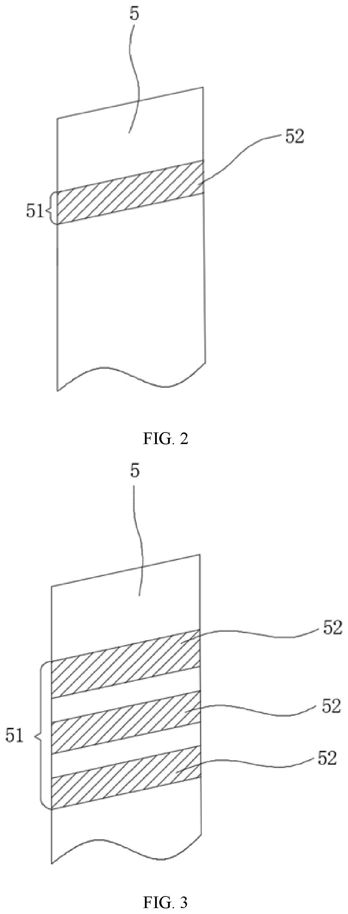

The breaking mechanism 3 may break the plural layers of materials 5 at the compounding region 51 by means of cutting, pulling, or melting, such that the plural layers of materials 5 at any one of the two end portions formed at the breaking position of the materials 5 are in a connected state. As shown in FIG. 2, when the compounding mechanism 2 forms one continuous compounding position 52 on the material 5 in the conveying direction, the compounding region 51 refers to a region between two boundaries of the compounding position 52 in the conveying direction. As shown in FIG. 3, when the compounding mechanism 2 forms a plurality of spaced compounding positions 52 on the material 5 in the conveying direction, the compounding region 51 may be a region between mutually distant boundaries of two compounding positions 52 at the extreme ends in the conveying direction.

In the embodiment of the present application, the compounding mechanism 2 is provided upstream of the winding pin 12, and the plural layers of materials 5 are laminated and then compounded together at the preset position by the compounding mechanism 2, such that the plural layers of materials 5 at each of the two end portions formed after the materials 5 are broken by the breaking mechanism 3 at the compounding region 51 are in a relatively fixed state, and therefore, the materials are not prone to be layered at the breakage moment and after breakage, and the plural layers of materials 5 are prevented from being misaligned. Furthermore, since the breaking mechanism 3 breaks the materials 5 at the compounding region 51, during the breakage, even if the plural layers of materials 5 are broken successively instead of simultaneously, the material layer 5 broken earlier also cannot spring back immediately due to a compounding relationship with other material layers 5, thus avoiding that each material layer 5 springs back individually due to an inconsistent breakage order of the plural layers of materials 5, and then avoiding that the plural layers of materials 5 are misaligned under an impact of a spring back force.

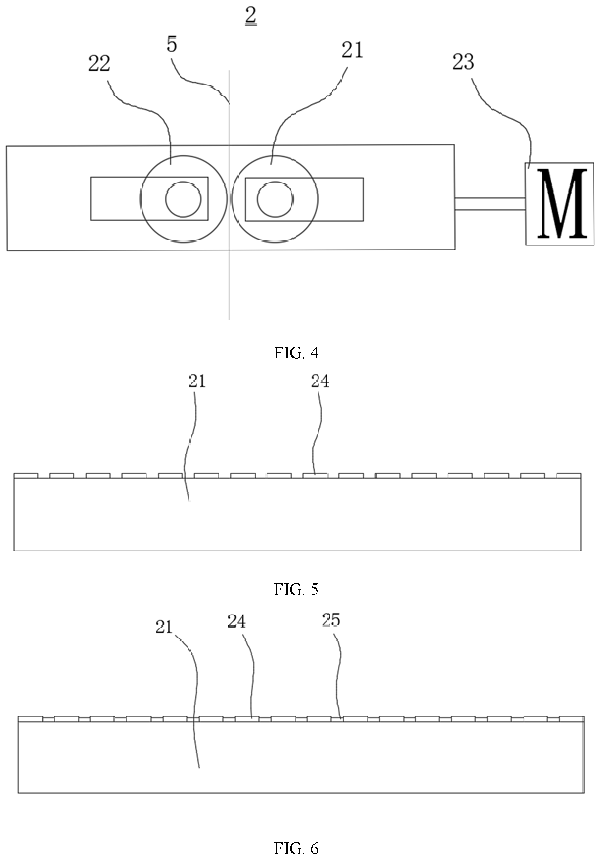

As shown in FIG. 4, in some embodiments, the compounding mechanism 2 includes a first hot melting piece 21, a second hot melting piece 22 and a driving assembly 23, the first hot melting piece and the second hot melting piece are oppositely arranged and spaced apart, and the material 5 passes between the first hot melting piece 21 and the second hot melting piece 22; the driving assembly 23 is connected with the first hot melting piece 21 and/or the second hot melting piece 22 to drive the first hot melting piece 21 and the second hot melting piece 22 to approach each other, so as to bond and compound the plural layers of materials 5 through hot pressing.

The first hot melting piece 21 and the second hot melting piece 22 may have the same or different structures, and may be hot press rollers, hot sealing heads, hot press flat plates, or the like. In some embodiments, the first hot melting piece 21 and the second hot melting piece 22 may be heated electrically, such that a hot melting temperature is easier to control, and certainly, in other embodiments, the first hot melting piece 21 and the second hot melting piece 22 may be heated in other manners, which is not limited in the embodiment of the present application.

The driving assembly 23 may be connected with the first hot melting piece 21 or the second hot melting piece 22 or both the first hot melting piece 21 and the second hot melting piece 22, and accordingly, the driving assembly 23 may drive the first hot melting piece 21 and the second hot melting piece 22 to approach each other in such a manner that the first hot melting piece 21 is driven to approach the second hot melting piece 22, or the second hot melting piece 22 is driven to approach the first hot melting piece 21, or the first hot melting piece 21 and the second hot melting piece 22 are driven to move simultaneously to approach each other. A structure of the driving assembly 23 may be various; for example, the driving assembly 23 includes one or more of a linear motor, a cylinder, a hydraulic cylinder, a lead screw nut mechanism and a worm gear mechanism, movement manners of the driving components of the above structures are the same as movement manners in the prior art, and driving principles and manners thereof are not repeated in the embodiment of the present application.

By adopting the above solution, when the plural layers of materials 5 are conveyed through the preset path, the first hot melting piece 21 and the second hot melting piece 22 are driven by the driving assembly 23 to approach each other to sandwich the plural layers of materials 5, and the plural layers of materials 5 are clamped and hot melted from two sides, such that the plural layers of materials 5 can be rapidly heated and pressed to be bonded and compounded.

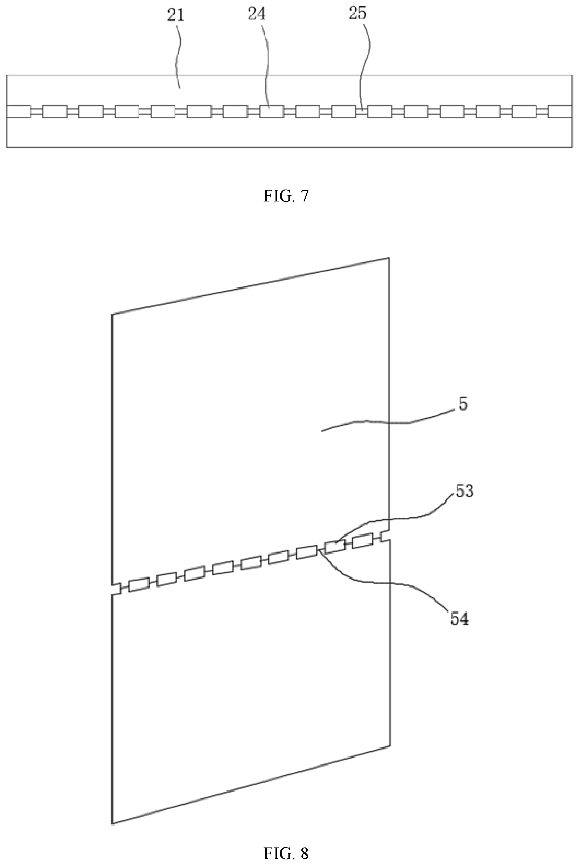

FIG. 5 shows a structure of the first hot melting piece in an embodiment of the present application, and as shown in FIG. 5, in some embodiments, a plurality of protrusions 24 are arranged on each of surfaces of the first hot melting piece 21 and/or the second hot melting piece 22 at intervals, and the protrusions 24 are configured to abut against the material 5 to hot melt a plurality of spaced holes 53 in the material 5 (see FIG. 8).

The protrusion 24 refers to a structure protruding from a surface of a body; for example, the first hot melting piece 21 and the second hot melting piece 22 are hot melting rollers or hot press plates, and then, the protrusion 24 may be a protruding part provided on a roller surface of the hot melting roller or a surface of the hot press plate, and the shape of a side of the protrusion 24 away from the body may be a circle, a rectangle or other shapes, so as to hot melt the hole 53 (see FIG. 8) with a corresponding shape on the material 5.

The protrusions 24 may be provided on the first hot melting piece 21, or the second hot melting piece 22, or both the first hot melting piece 21 and the second hot melting piece 22; however, when both the first hot melting piece 21 and the second hot melting piece 22 are provided with the protrusions 24, the protrusions 24 located on the first hot melting piece 21 and the second hot melting piece 22 may be provided at positions opposite to each other, such that when the first hot melting piece 21 and the second hot melting piece 22 approach each other, the protrusions 24 first abut against the material 5 to melt the holes 53 on the material 5. FIG. 5 illustrates only an example in which the protrusion 24 is provided on the first hot melting piece 21, and it can be understood that the structure that the protrusion 24 is provided on the second hot melting piece 22 is the same as or similar to the structure that the protrusion is provided on the first hot melting piece 21.

A principle of using the protrusion 24 to hot melt the hole 53 in the material 5 is as follows: in the process that the first hot melting piece 21 and the second hot melting piece 22 approach each other, the protrusion 24 comes into contact with the material 5 first, the protrusion 24 more tightly abuts against the material 5, and in this case, the material 5 at a position corresponding to the protrusion 24 is heated for a longer time and easier to melt, and since the material 5 at the position corresponding to the protrusion 24 is abutted more tightly, the material more easily flows outside an abutting region of the protrusion 24 after heated and melted, so as to form the hole 53 at the position corresponding to the protrusion 24; in addition, the plural layers of materials 5 are bonded at edges of the holes 53, such that the plural layers of materials 5 are not prone to separation and misalignment; at the position of the hole 53, the material 5 is more fragile and is broken more easily, and therefore, a part other than the hole 53 is less pulled and deformed.

FIG. 6 is a schematic structural diagram of another first hot melting piece 21 in an embodiment of the present application, and FIG. 7 is a top view of the first hot melting piece 21 of FIG. 6, and as shown in FIGS. 6 and 7, in some embodiments, a pre-cutting portion 25 is provided between adjacent protrusions 24, and a protruding height of the pre-cutting portion 25 is lower than that of the protrusion 24, so as to contact the material 5 and form a pre-cutting position 54 on the material.

Optionally, the pre-cutting portion 25 may be connected with two adjacent protrusions 24, such that a line formed by connecting the hole 53 and the pre-cutting position 54 can be formed on the material 5 abutted by the first hot melting piece 21 and the second hot melting piece 22, as shown in FIG. 8, and FIG. 8 is a material structure compounded by the compounding mechanism in the embodiment of the present application, and it can be seen that on the material 5 in the drawing, a straight line is formed by the hole 53 and the pre-cutting position 54.

A principle that the pre-cutting portion 25 can form the pre-cutting position 54 is as follows: since the protruding height of the pre-cutting portion 25 is lower than that of the protrusion 24, when the first hot melting piece 21 and the second hot melting piece 22 get close to each other, the protrusion 24 abuts against the material 5 firstly, and then, the pre-cutting portion 25 abuts against the material; when the protrusion 24 hot melts the holes 53 in the plural layers of materials 5, since the protruding height of the pre-cutting portion 25 is lower than that of the protrusion 24, the material 5 is pre-segmented at a position corresponding to the pre-cutting portion 25; for example, in one embodiment, as a pre-segmenting manner, the pre-cutting portion 25 may be configured as a structure having a blade, and the blade is configured to slightly press the material 5 to form a cut mark on the material 5, but not completely cut the material 5 off. In another embodiment, as a pre-segmenting manner, the pre-cutting portion 25 may be configured as a heatable structure, and the pre-cutting portion 25 contacts the plural layers of materials 5, such that the plural layers of materials 5 are hot melted and pressed to be thinned, but not broken. The pre-cutting position 54 formed on the material 5 by the above pre-segmenting manner is a weak region of the material 5, and the weak region is connected with two adjacent holes 53.

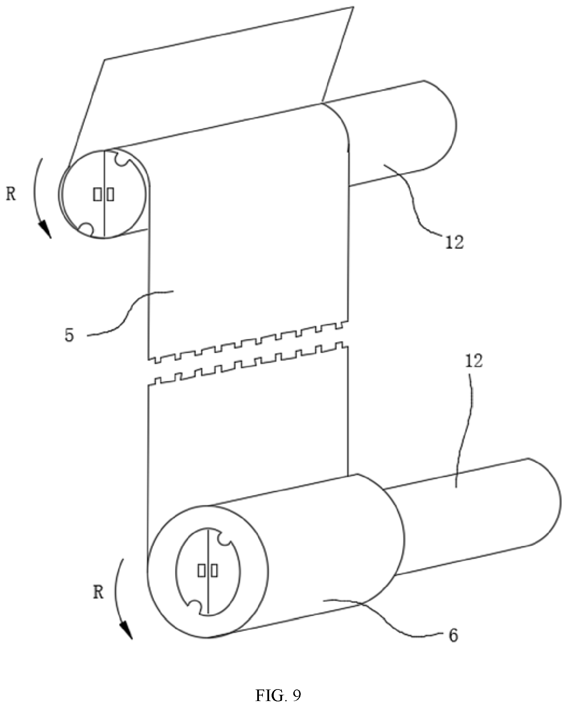

FIG. 9 is a schematic diagram of a state where the material compounded by the compounding mechanism is broken in the embodiment of the present application, and as shown in FIGS. 8 and 9, since the hole 53 and the pre-cutting position 54 form a straight line on the material 5, when the winding pin A and the winding pin B rotate together during switching of the material 5, the material 5 can be tensioned to be rapidly broken along the line formed by the hole 53 and the pre-cutting position 54, and a cutter 32 is not required to cut off the material during this process, and therefore, the material 5 is broken more quickly and conveniently, and the material 5 is not prone to be deformed during the breakage.

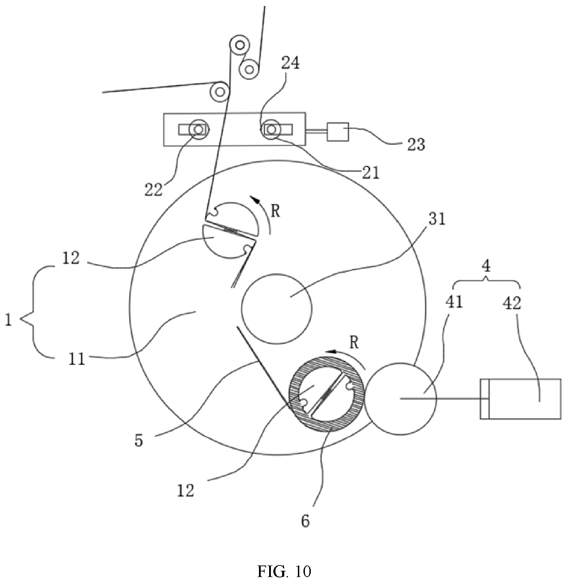

FIG. 10 is a schematic structural diagram of a winding device according to another embodiment of the present application, and as shown in FIG. 10, in some embodiments, the breaking mechanism 3 is an axial roller 31 provided in a center of the rotating disc 11, and the axial roller 31 is configured to tension the material 5 between any two winding pins 12 and break the materials 5 compounded together at the pre-cutting position 54.

In a case where the compounding mechanism 2 includes the protrusion 24 and the pre-cutting portion 25, the breaking mechanism 3 is configured as the axial roller 31, and the axial roller 31 is used for applying a tensioning force to the material 5, such that the material 5 can be easily broken at the connecting line formed by the pre-cutting position 54 and the hole 53, an effect of breaking the material 5 is achieved, the structure is simple, and equipment shutdown is not required in the whole breaking process.

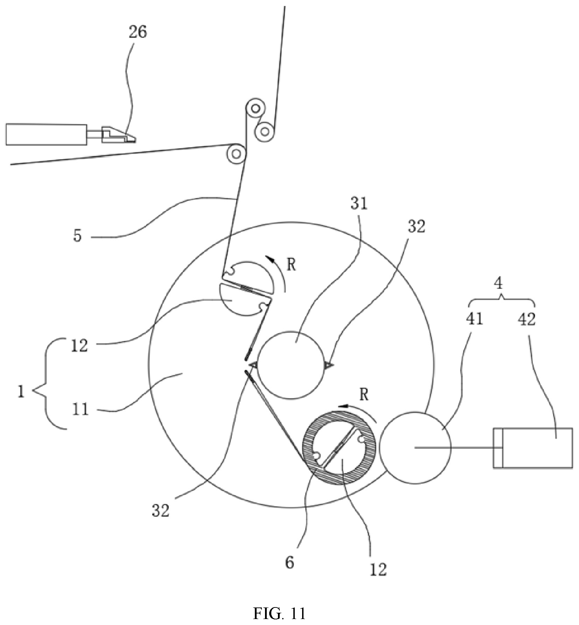

FIG. 11 is a schematic structural diagram of a winding device according to another embodiment of the present application, and as shown in FIG. 11, in some embodiments, the compounding mechanism 2 includes a gluing member 26 configured to spray glue between two adjacent layers of materials 5 to compound the materials 5.

The gluing member 26 is provided between two adjacent layers of materials 5 and can spray the glue to a side surface of any layer of material 5, such that after laminated, the plural layers of materials 5 can be connected together by means of the glue to compound the plural layers of materials 5. Optionally, one or more glue connection positions may be provided along the conveying direction of the material 5.

By adopting the above solution, the manner of compounding the plural layers of materials 5 by spraying the glue is simpler and easier, and damage to a structure of the materials 5 is smaller.

As shown in FIG. 11, in some embodiments, the breaking mechanism 3 includes the cutter 32 provided on the rotating disc 11, and the cutter 32 is configured to cut off the compounded plural layers of materials 5 at the compounding region 51.

In a case where the compounding mechanism 2 includes the hot melting roller, or a general press roller, or the gluing member 26, or the protrusion 24, the cutter 32 may be used to cut off the materials 5 compounded together, thereby ensuring that the materials 5 can be cut off quickly and the end portions of the cut-off materials 5 are smoother.

In some embodiments, the cutter 32 may be used in combination with the axial roller 31 in the above embodiment; for example, as shown in FIG. 11, the cutter 32 is provided on the axial roller 31, a blade of the cutter 32 faces away from the axial roller 31, and when the axial roller 31 rotates with the rotating disc 11, a position of the cutter 32 avoids a connecting line between a rotating center of the rotating disc 11 and a center of any winding pin 12; for example, the cutter 32 is located on a bisector of an included angle formed by two winding pins 12 and the rotating center of the rotating disc 11; when the material 5 can be switched between any two adjacent winding pins 12, a plurality of cutters may be provided at different positions of the axial roller 31, and each cutter is located on the angle bisector of the included angle formed by two adjacent winding pins 12 and the rotating center of the rotating disc 11; for example, as shown in FIG. 11, when two winding pins 12 are provided on the rotating disc 11, two cutters 32 are provided, and the two cutters 32 are located in two included angles formed by connecting lines between the two winding pins 12 and the rotating center of the rotating disc 11 respectively; when the axial roller 31 can rotate relative to the rotating disc 11, one cutter 32 can be provided, and when the material 5 is required to be switched between two winding pins 12, the axial roller 31 is rotated, and the cutter 32 is rotated to the included angle range formed by the two winding pins 12 and the rotating center of the rotating disc 11.

In some embodiments, the cutter 32 may also be separately fixed on the rotating disc 11 for use; for example, the cutter 32 is directly fixed on the end surface of the rotating disc 11 provided with the winding pin 12; the number of the cutter 32 may be one or more, and each cutter 32 is located in the included angle formed by connecting lines between two adjacent winding pins and the rotating center of the rotating disc 11, so as to contact the material 5 and cut off the material 5 when the material 5 is switched between two adjacent winding pins 12.

In some embodiments, the cutter 32 is configured as a heatable cutter.

The cutter 32 may be heated electrically to control a temperature of the cutter 32 conveniently, and the entire cutter 32 or the blade thereof may be heated.

By adopting the heatable cutter 32, the heatable cutter 32 can cut off the material 5 by means of hot cutting, and a cut-off speed is higher.

It should be noted that, after the materials 5 are compounded by applying the glue, in order to avoid that some glue is heated and adheres to the cutter 32 to affect sharpness of the cutter 32, the glue may be applied at plural positions on the material 5, plural compounding positions 52 are generated, the adjacent compounding positions 52 are spaced apart, and a cut-off position of the heatable cutter is located between two compounding positions 52, such that the heatable cutter 32 can be prevented from directly contacting the glue to avoid that the glue adheres to the cutter 32 after heated.

In some cases, at the moment when the plural layers of materials 5 are broken, the jelly roll 6 already wound around the winding pin 12 may loosen due to loss of the tension on the material 5, and in order to avoid loosening of the wound jelly roll 6, as shown in FIGS. 10 and 11, in some embodiments, the winding device further includes a pressing mechanism 4, and the pressing mechanism 4 is provided on one side of a path of rotation of the winding pin 12 with the rotating disc 11, and is configured to tightly press the material 5 on the winding pin 12 during breakage.

Optionally, the pressing mechanism 4 includes a pressing piece 41, the pressing piece 41 may be of any shape, and a surface of the pressing piece 41 contacting the jelly roll 6 is set to be an arc surface or a plane to prevent a sharp corner from damaging the material 5 on an outer layer of the jelly roll 6.

Optionally, the pressing piece 41 may be a cylindrical press roller, and the press roller can rotate with the jelly roll 6 while tightly pressing the jelly roll 6, such that when the rotating disc 11 drives the winding pin 12 and the jelly roll 6 to rotate, the press roller can not only prevent the jelly roll 6 from loosening, but also rotate relative to the jelly roll 6 to prevent friction damage to the material 5 on the outer layer of the jelly roll 6 when the jelly roll 6 rotates.

Optionally, the pressing mechanism 4 further includes a driving piece 42, the driving piece 42 drives the pressing piece to move to get close to or move away from the jelly roll 6; for example, when the breaking mechanism 3 breaks the material 5, the driving piece 42 drives the pressing piece 41 to approach the jelly roll 6 to tightly press the jelly roll 6, and after the material 5 located on the outer layer of the jelly roll 6 is fixed, the driving piece 42 can drive the pressing piece 41 to move away from the jelly roll 6, such that the jelly roll 6 can be taken away conveniently. The driving piece 42 may be a cylinder, a hydraulic cylinder, a linear motor, or the like.

Therefore, the winding device provided with the pressing mechanism 4 is not prone to cause the loosening of the jelly roll 6 when the material 5 is broken, and is beneficial to guaranteeing the quality of the jelly roll 6, so as to improve the quality of the battery.

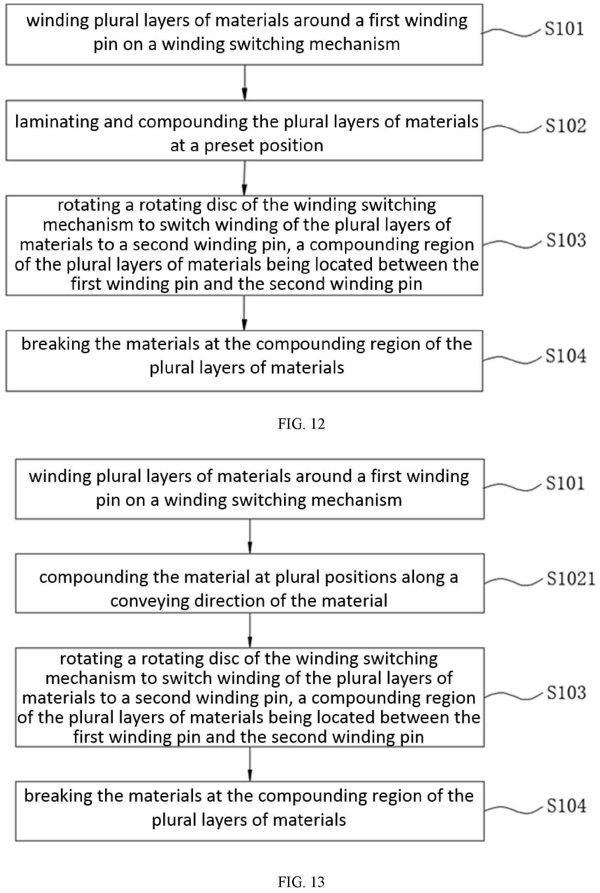

FIG. 12 is a flow chart of a material winding method, and as shown in FIG. 12, the embodiment of the present application further provides a material winding method, including the following steps:
S101: winding plural layers of materials 5 around a first winding pin on a winding switching mechanism 1;
S102: laminating and compounding the plural layers of materials 5 at a preset position;
S103: rotating a rotating disc 11 of the winding switching mechanism 1 to switch winding of the plural layers of materials 5 to a second winding pin, a compounding region 51 of the plural layers of materials 5 being located between the first winding pin and the second winding pin; and
S104: breaking the materials 5 at the compounding region 51 of the plural layers of materials 5.

The material winding method can be implemented by the winding device according to any embodiment of the first aspect, and the specific structure and the using method of the winding device are described in detail in the above embodiment of the winding device, and are not repeated in the embodiment of the present application.

By adopting the above solution, since the plural layers of materials 5 are compounded together in advance before broken, the plural layers of materials 5 at each of two end portions formed after the materials 5 are broken at the compounding region 51 are in a relatively fixed state, such that the materials are not prone to be layered at the breakage moment and after breakage, and the plural layers of materials 5 are prevented from being misaligned. Furthermore, since a breaking position of the plural layers of materials 5 is located at the compounding region 51, during the breakage, even if the plural layers of materials 5 are broken successively instead of simultaneously, the material layer 5 broken earlier also cannot spring back immediately due to a compounding relationship with other material layers 5, thus avoiding that each material layer 5 springs back individually due to an inconsistent breakage order of the plural layers of materials 5, and then avoiding that the plural layers of materials 5 are misaligned under an impact of a spring back force.

In some embodiments, a method of laminating and compounding the plural layers of materials 5 at the preset position includes at least one of hot melting, rolling, and gluing.

Hot melting can be performed by adopting a hot melting roller, rolling can be performed by adopting two press rollers to oppositely press the plural layers of materials 5 from both sides, and gluing can be performed by uniformly spraying glue between two adjacent layers of materials 5 through a high pressure.

The plural layers of materials 5 can be compounded through hot melting, rolling and gluing, a manner is simple, and implementation is easy.

As shown in FIG. 13, in some embodiments, when the plural layers of materials 5 are laminated and compounded at the preset position, the method specifically includes: S1021: performing compounding at plural positions along a conveying direction of the material 5. A flow chart of a material winding method with the step is shown in FIG. 13.

In one implementation, this step can be implemented by the hot melting roller or the press roller intermittently approaching and pressing-getting away from-approaching and pressing-getting away from the material.

In another implementation, this step may be implemented by a gluing member 26 intermittently spraying glue.

The adoption of the above solution prevents poor compounding during one-position compounding. Furthermore, after the materials 5 are compounded at the plural positions, an area of the compounding region 51 is greatly increased, and in the subsequent breaking process, a breaking position can be located at any position of the compounding region 51, a region for breaking is increased, and a positioning difficulty in an operation process of a breaking mechanism 3 is reduced.

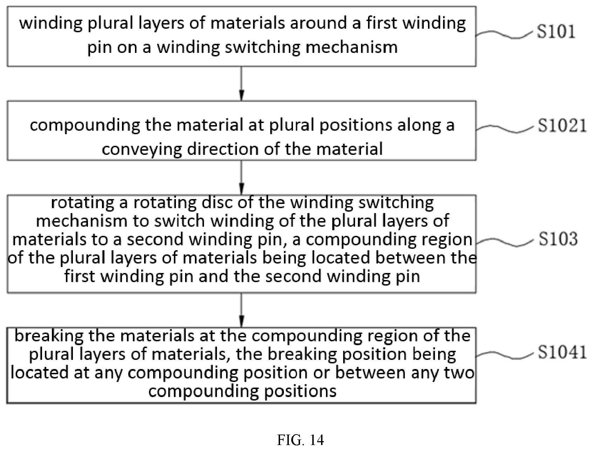

As shown in FIG. 14, in some embodiments, when the material 5 is compounded at plural positions in the conveying direction of the material 5 using step S1021, the breaking position where the material 5 is broken at the compounding region 51 of the plural layers of materials 5 is located at any compounding position 52 or between any two compounding positions 52, which is shown in step S1041 in FIG. 14.

When the compounding region 51 has one compounding position 52, the materials 5 can be broken at the compounding position 52 to ensure that the plural layers of materials 5 at the two end portions formed after the materials 5 are broken are compounded together.

When the compounding region 51 has a plurality of compounding positions 52, the materials 5 can be broken along the compounding positions 52 or between two compounding positions 52, and when the materials are broken between the compounding positions 52, the plural layers of materials 5 are separated from each other at the breaking position, the materials are soft and easy to break, and each of the two end portions formed after the materials 5 are broken can be ensured to have a complete compounding region, thus further preventing misalignment at any end after breakage.

Furthermore, when the plural layers of materials 5 are compounded by applying glue, since some glue can be heated and adhere to a cutter 32 to affect sharpness of the cutter 32, when a cut-off position is located between any two compounding positions 52, the heatable cutter 32 can be prevented from directly contacting the glue to avoid that the glue adheres to the cutter 32 after heated.

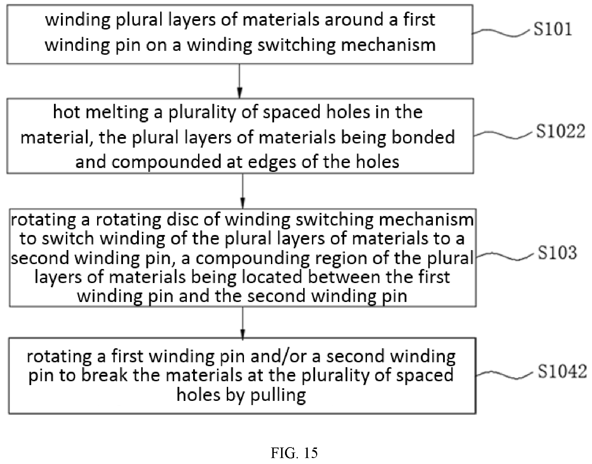

By adopting the above solution, whether the breaking position is located at any compounding position 52 or between any two compounding positions 52, the plural layers of materials 5 at the two end portions formed after the materials 5 are broken can be guaranteed to be in a compounded state, thus preventing misalignment caused by layering of the plural layers of materials 5. As shown in FIG. 15, in some embodiments, when the plural layers of materials 5 are compounded through hot melting, the compounding method includes: S1022: hot melting a plurality of spaced holes 53 in the material 5, the plural layers of materials 5 being bonded and compounded at edges of the holes 53. A method of breaking the materials 5 at the compounding region 51 of the plural layers of materials 5 includes: S1042: rotating a first winding pin and/or a second winding pin to break the materials 5 at the plurality of spaced holes 53 by pulling.

When the material 5 is broken, only the first winding pin may be rotated, or only the second winding pin may be rotated, or both the first winding pin and the second winding pin may be rotated.

By adopting the above solution, the holes are formed in the plural layers of materials 5 through hot melting, and the plural layers of materials 5 are bonded and compounded at the edges of the holes 53 and not prone to be separated. On an arrangement line of the holes 53, the materials 5 are only connected by spacing regions between the holes 53, such that connection is weak, and when the first winding pin and/or the second winding pin rotate, the materials 5 between the first winding pin 12 and the second winding pin 12 are subjected to a large tension and broken at the weak positions; that is, the materials 5 are broken at the plural spaced holes 53, the materials 5 are broken without a cutter, a structure is simple, and an operation efficiency is high.

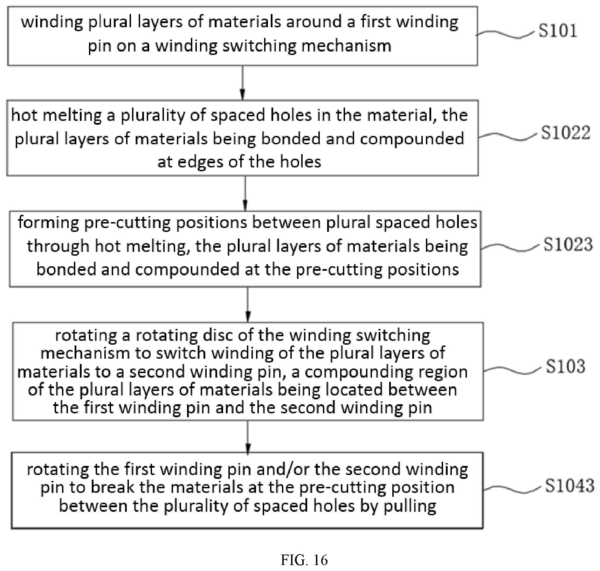

As shown in FIG. 16, in some embodiments, when the plural layers of materials 5 are compounded through hot melting, the compounding method further includes: S1023: forming pre-cutting positions 54 between the plurality of spaced holes 53 through hot melting, the plural layers of materials 5 being bonded and compounded at the pre-cutting positions 54. The method of breaking the materials 5 at the compounding region 51 of the plural layers of materials 5 further includes: S1043: rotating the first winding pin and/or the second winding pin to break the materials 5 at the pre-cutting position 54 between the plurality of spaced holes 53 by pulling.

S1022 and S1023 may be performed synchronously or sequentially.

By adopting the above solution, the pre-cutting position 54 is a weak region of the material 5, and the weak region is connected with two adjacent holes 53, such that when the first winding pin and/or the second winding pin rotate, the material 5 between the first winding pin and the second winding pin is more easily broken along a connecting line of the pre-cutting position 54 and the holes 53 after tensioned, and the material 5 is not prone to be deformed in the breaking process.

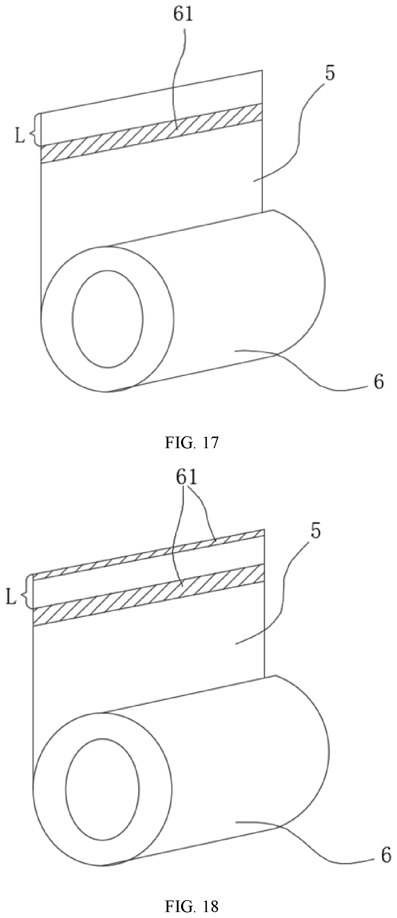

As shown in FIGS. 17 and 18, the embodiment of the present application further provides a jelly roll 6 formed by winding a plurality of layers of materials 5, wherein the plurality of layers of materials 5 are provided with a compounding portion 61, the plurality of layers of materials 5 are laminated and compounded together at the compounding portion 61, and a predetermined distance L exists between the compounding portion 61 and an end portion of the material 5 in a winding direction; the end portion is an end of an innermost circle of the material 5 in the winding direction, or the end portion is an end of an outermost circle of the material 5 in the winding direction.

The compounding portion 61 is a portion where the plural layers of materials 5 are compounded and bonded, and the compounding portion 61 can prevent the plural layers of materials 5 from being misaligned.

In one jelly roll, the number of the compounding portions 61 may be one or more, and each compounding portion 61 may have a predetermined distance L from any end portion of the material 5; for example, as shown in FIG. 17, one compounding portion 61 is provided on one jelly roll 6, and the compounding portion 61 has the predetermined distance L from one end of the outermost circle of the material 5 in the winding direction, such that the compounding portion 61 is within the protection scope of the present application even if the compounding portion 61 does not have the predetermined distance L from one end of the innermost circle of the material 5 in the winding direction. For another example, as shown in FIG. 18, two compounding portions 61 are provided on one jelly roll 6, and the two compounding portions 61 may both have the predetermined distance L from one end of the outermost circle of the material 5 in the winding direction, or have the predetermined distance L from one end of the innermost circle of the material 5 in the winding direction, or one compounding portion has the predetermined distance L from one end of the outermost circle of the material 5 in the winding direction, and the other compounding portion has the predetermined distance L from one end of the innermost circle of the material 5 in the winding direction, and the above solutions fall within the protection scope of the present application.

As shown in FIGS. 17 and 18, the predetermined distance L between the compounding portion 61 and the end portion of the material 5 refers to a distance from a side of the compounding portion 61 close to a certain end portion of the material 5 to the end portion. The predetermined distance L is used to define a position of the compounding portion 61 to avoid that the compounding portion 61 is so far from the end portion of the material that the layers of materials 5 are free to swing or spring back individually at the end portion, resulting in layering of the plural layers of materials 5.

The jelly roll 6 according to the embodiment of the present application can be wound by any winding device according to the above embodiment using any material winding method according to the above embodiment, such that the characteristics and the beneficial effects of the jelly roll 6 according to the embodiment of the present application have been described in the above embodiments, and are not repeated in the embodiment of the present application.

As shown in FIG. 18, in some embodiments, a plurality of compounding portions 61 are provided, and the plurality of compounding portions 61 are arranged at intervals. FIG. 18 illustrates a case where two compounding portions 61 are provided and the two compounding portions 61 are spaced apart from each other.

In some embodiments, the plural layers of materials 5 are compounded together at the compounding portion 61 by means of hot melting compounding and/or rolling compounding and/or gluing compounding.

That is, the plural layers of materials 5 may be compounded by one, two, or three of hot melting compounding, rolling compounding, and gluing compounding to form the compounding position; for example, rolling is performed while hot melting is performed, or rolling is performed after gluing, or hot pressing is performed after gluing (the hot melting roller performs hot melting and rolling simultaneously).

It should be noted that the compounding position 52 formed by hot pressing allows clear fusion between the plural layers of materials 5 to be seen in a section, making it difficult to distinguish boundaries of single layers of materials; the two adjacent layers of materials 5 at the compounding position 52 formed by means of rolling are attached more tightly and the material 5 may become thinner; the compounding position formed by gluing compounding allows a trace of glue to be seen between the two layers of materials 5 of the section.

In some embodiments, the predetermined distance L is less than a perimeter of the innermost circle of the jelly roll 6 when the end portion is the end of the innermost circle of the material 5 in the winding direction.

Since the perimeter of the innermost circle of the jelly roll 6 is generally greater than 0, the distance between the compounding portion 61 and the end portion of the jelly roll 6 may be equal to 0, or greater than 0 but less than the perimeter of the inner circle. When the distance between the compounding portion 61 and the end portion of the jelly roll 6 is greater than 0, there exists a possibility that the materials 5 between the end portion of the jelly roll 6 and the compounding portion 61 are misaligned, and this possibility increases with an increase in distance. When the jelly roll 6 is used as the electrode assembly of a battery cell, since in the inner circle of the jelly roll 6, only the separator is generally laminated and wound, and no electrode plate exists, a short circuit between the positive electrode plate and the negative electrode plate of the electrode assembly is not caused even if the materials 5 are slightly misaligned within the innermost circle of the jelly roll 6. Therefore, in the embodiment of the present application, when the end portion is one end of the innermost circle of the material 5 in the winding direction, the predetermined distance L is set to be less than the perimeter of the innermost circle of the jelly roll 6, which not only can avoid that the materials 5 are misaligned due to an excessively long distance between the compounding portion 61 and the end portion of the material 5, but also can limit the position where the materials 5 are likely to be misaligned to a position of the innermost circle of the jelly roll 6 unlikely to cause a quality problem of the battery, thereby reducing or even avoiding the quality problem of the battery caused by the misalignment of the plural layers of materials 5.

In some embodiments, the predetermined distance L is less than a perimeter of the outermost circle of the jelly roll 6 when the end portion is the end of the outermost circle of the material 5 in the winding direction.

When the jelly roll 6 is used as the electrode assembly of a battery cell, since in the outer circle of the jelly roll 6, only the separator is generally laminated and wound, and no electrode plate exists, a short circuit between the positive electrode plate and the negative electrode plate of the electrode assembly is not caused even if the materials 5 are slightly misaligned within the outermost circle of the jelly roll 6. Therefore, in the embodiment of the present application, when the end portion is one end of the outermost circle of the material 5 in the winding direction, the predetermined distance L is set to be less than the perimeter of the outermost circle of the jelly roll 6, which not only can avoid that the materials 5 are misaligned due to an excessively long distance between the compounding portion 61 and the end portion of the material 5, but also can limit the position where the materials 5 are likely to be misaligned to a position of the outermost circle of the jelly roll 6 unlikely to cause a quality problem of the battery, thereby reducing or even avoiding the quality problem of the battery caused by the misalignment of the plural layers of materials 5.

As shown in FIGS. 17 and 18, in some embodiments, the end portions of the plural layers of materials 5 at least partially coincide with the compounding position 52 or avoid the compounding position 52. FIG. 18 illustrates a case where the end portions of the material 5 coincide with the compounding position 52, and FIG. 17 illustrates a case where the end portions of the material 5 avoids the compounding position 52.

In summary, in the winding device according to the embodiment of the present application, the compounding mechanism 2 is provided upstream of the winding pin 12, and the plural layers of materials 5 are laminated and then compounded together by the compounding mechanism 2, such that the plural layers of materials 5 at each of the two end portions formed after the materials 5 are broken by the breaking mechanism 3 at the compounding region 51 are in a relatively fixed state, and therefore, the materials are not prone to be layered at the breakage moment and after breakage, and the plural layers of materials 5 are prevented from being misaligned.

It should be understood by those skilled in the art that although some embodiments here comprise some features comprised in other embodiments rather than other features, combinations of features in different embodiments mean that the combinations are within the scope of the present application and forms different embodiments. For example, in the claims, any one of the embodiments for which the protection is sought can be used in any combination manner.

The above embodiments are only used to illustrate the technical solutions of the present application, not to limit the present application; although the present application is described in detail with reference to the above embodiments, those having ordinary skill in the art should understand that they still can modify technical solutions recited in the aforesaid embodiments or equivalently replace partial technical features therein; these modifications or substitutions do not make essence of corresponding technical solutions depart from the spirit and scope of technical solutions of embodiments of the present application.

In the following, the present invention is further described in the form of aspects, which describe the invention independently from the above disclosure.

The above disclosure and embodiments however explain details of the following aspects, and may be combined therewith.
1. A winding device, applicable for winding a material, comprising:
   a winding switching mechanism, comprising a rotating disc and a plurality of winding pins arranged on the rotating disc at intervals, the material being wound around one of the winding pins along a preset path;
   a compounding mechanism, provided upstream of the winding pins along the preset path and configured to laminate and compound plural layers of the material at a preset position; and
   a breaking mechanism, provided between the compounding mechanism and any one of the winding pins along the preset path and configured to break compounded plural layers of the material at a compounding region.
2. The winding device according to aspect 1, wherein the compounding mechanism comprises:
   a first hot melting piece and a second hot melting piece oppositely arranged and spaced apart, the material passing between the first hot melting piece and the second hot melting piece; and
   a driving assembly, connected with the first hot melting piece and/or the second hot melting piece to drive the first hot melting piece and the second hot melting piece to approach each other, so as to bond and compound the plural layers of the material through hot pressing.
3. The winding device according to aspect 2, wherein a plurality of protrusions are arranged on each of surfaces of the first hot melting piece and/or the second hot melting piece at intervals, and the protrusions are configured to abut against the material to hot melt a plurality of spaced holes in the material.
4. The winding device according to aspect 3, wherein a pre-cutting portion is provided between adjacent protrusions, and a protruding height of the pre-cutting portion is lower than that of the protrusions, so as to contact the material and form a pre-cutting position on the material.
5. The winding device according to aspect 4, wherein the breaking mechanism is an axial roller provided in a center of the rotating disc, and the axial roller is configured to tension the material between any two of the winding pins and break the material compounded together at the pre-cutting position.
6. The winding device according to any one of aspects 1 to 5, wherein the compounding mechanism comprises a gluing member configured to spray glue between two adjacent layers of the material to compound the material.
7. The winding device according to any one of aspects 1 to 6, wherein the breaking mechanism comprises a cutter provided on the rotating disc, and the cutter is configured to cut off compounded plural layers of the material at the compounding region.
8. The winding device according to aspect 7, wherein the cutter is configured as a heatable cutter.
9. The winding device according to any one of aspects 1 to 8, wherein the winding device further comprises a pressing mechanism, and the pressing mechanism is provided on one side of a path of rotation of the winding pins with the rotating disc and configured to press the material on the winding pins tightly during breakage.
10. A material winding method, comprising:
   winding plural layers of a material around a first winding pin on a winding switching mechanism;
   laminating and compounding the plural layers of the material at a preset position;
   rotating a rotating disc of the winding switching mechanism to switch winding of the plural layers of the material to a second winding pin, a compounding region of the plural layers of the material being located between the first winding pin and the second winding pin; and
   breaking the material at the compounding region of the plural layers of the material.
11. The material winding method according to aspect 10, wherein a method of laminating and compounding the plural layers of the material at the preset position comprises at least one of hot melting, rolling, and gluing.
12. The material winding method according to aspect 11, wherein the plural layers of the material are compounded at plural positions along a conveying direction of the material when laminated and compounded at the preset position.
13. The material winding method according to aspect 12, wherein the breaking position is located at any compounding position or between any two compounding positions when the materials are broken at the compounding region of the plural layers of the material.
14. The material winding method according to any one of aspects 11 to 13, wherein when the plural layers of the material are compounded through hot melting, the compounding method comprises: hot melting a plurality of spaced holes in the material, the plural layers of the material being bonded and compounded at edges of the holes; and
   a method of breaking the material at the compounding region of the plural layers of the material comprises: rotating a first winding pin and/or a second winding pin to break the material at the plurality of spaced holes by pulling.
15. The material winding method according to aspect 14, wherein when the plural layers of the material are compounded through hot melting, the compounding method further comprises: forming pre-cutting positions between the plurality of spaced holes through hot melting, the plural layers of the material being bonded and compounded at the pre-cutting positions; and
   the method of breaking the material at the compounding region of the plural layers of the material further comprises: rotating the first winding pin and/or the second winding pin to break the material at the pre-cutting positions between the plurality of spaced holes by pulling.
16. A jelly roll, formed by winding a plurality of layers of a material, wherein the plurality of layers of the material are provided with a compounding portion, the plurality of layers of the material are laminated and compounded together at the compounding portion, and a predetermined distance exists between the compounding portion and an end portion of the material in a winding direction; and the end portion is an end of an innermost circle of the material in the winding direction, or the end portion is an end of an outermost circle of the material in the winding direction.
17. The jelly roll according to aspect 16, wherein a plurality of compounding portions are provided, and the plurality of compounding portions are arranged at intervals.
18. The jelly roll according to aspect 16 or 17, wherein the plurality of layers of the material are compounded together at the compounding portion by hot melting compounding and/or rolling compounding and/or gluing compounding.
19. The jelly roll according to any one of aspects 16 to 18, wherein the predetermined distance is less than a perimeter of the innermost circle of the jelly roll when the end portion is the end of the innermost circle of the material in the winding direction.
20. The jelly roll according to any one of aspects 16 to 18, wherein the predetermined distance is less than a perimeter of the outermost circle of the jelly roll when the end portion is the end of the outermost circle of the material in the winding direction.

## Claims

1. A battery cell comprising an electrode assembly, the electrode assembly being a jelly roll (6) formed by winding a plurality of layers of a material (5), wherein the plurality of layers of the material (5) are provided with a compounding portion (61), the plurality of layers of the material (5) are laminated and compounded together at the compounding portion (61), and a predetermined distance (L) exists between the compounding portion (61) and an end portion of the material (5) in a winding direction; and the end portion is an end of an outermost circle of the material (5) in the winding direction
wherein the predetermined distance (L) is less than a perimeter of the outermost circle of the jelly roll (6).

2. The battery cell according to claim 1, wherein a plurality of compounding portions (61) are provided, and the plurality of compounding portions (61) are arranged at intervals.

3. The battery cell according to claim 1 or 2, wherein the plurality of layers of the material (5) are compounded together at the compounding portion (61) by hot melting compounding and/or rolling compounding and/or gluing compounding.

4. The battery cell according to any one of claims 1 to 3, wherein the predetermined distance (L) is less than a perimeter of the innermost circle of the jelly roll (6) when the end portion is the end of the innermost circle of the material (5) in the winding direction.
